Europäisches Patentamt

European Patent Office

Office européen des brevets

(19)

(11) EP 0 900 590 A1

(12) EUROPEAN PATENT APPLICATION

(43) Date of publication:
10.03.1999 Bulletin 1999/10

(51) Int. Cl.$^6$: **B01J 8/24**, C08F 2/34,
C08F 10/00

(21) Application number: 98116807.3

(22) Date of filing: 04.09.1998

(84) Designated Contracting States:
AT BE CH CY DE DK ES FI FR GB GR IE IT LI LU
MC NL PT SE
Designated Extension States:
AL LT LV MK RO SI

(30) Priority: 05.09.1997 JP 241446/97

(71) Applicant:
Mitsui Chemicals, Inc.
Tokyo 100-6070 (JP)

(72) Inventors:
• Yamamoto, Ryouichi
c/o MITSUI CHEMICALS, INC.
Ichihara-shi, Chiba 299-0108 (JP)

• Kikuchi, Yoshiaki
c/o MITSUI SEKKA ENG. CO., LTD.
Ichihara-shi, Chiba 299-0108 (JP)
• Doi, Kenji
c/o MITSUI CHEMICALS, INC.
Ichihara-shi, Chiba 299-0108 (JP)
• Okano, Toshihiro
c/o MITSUI SEKKA ENG. CO., LTD.
Ichihara-shi, Chiba 299-0108 (JP)
• Hattori, Fumio
c/o MITSUI SEKKA ENGINEERING CO.LTD
Ichihara-shi, Chiba 299-0108 (JP)

(74) Representative: HOFFMANN - EITLE
Patent- und Rechtsanwälte
Arabellastrasse 4
81925 München (DE)

(54) **Method of controlling gas flow rate in gas phase polymerization apparatus and gas phase polymerization apparatus**

(57) The gas phase polymerization apparatus of the present invention comprises differential pressure detecting unit 31 capable of measuring a gaseous monomer pressure differential between an inlet side and an outlet side of blower 8; and flow rate controlling unit 33 comprising CPU 34 and blower controlling unit 35, wherein the CPU 34 is capable of computing parameter H based on the pressure differential measured by the differential pressure detecting unit 31 and the density of the gaseous monomer and capable of computing a number of revolutions to be exhibited by a blower impeller for obtaining desirable gas flow rate Q from the parameter H on the basis of characteristic curve of the blower 8 and wherein the blower controlling unit 35 is capable of controlling the number of revolutions of the impeller of the blower 8 by the number of revolutions computed by the CPU 34. This gas phase polymerization apparatus enables not only controlling the flow rate of gaseous monomer blown into a fluid bed reactor during the polymerization reaction accurately in conformity with the state of gas in the fluid bed reactor but also realizing the flow rate control with excellent response characteristic and at low pressure loss.

Fig. 1

(Cont. next page)

*Fig. 2*

**Description**

FIELD OF THE INVENTION

The present invention relates to a method of controlling a gas flow rate in a gas phase polymerization apparatus, in which the flow rate of gaseous monomer is controlled in producing a polymer through the step of blowing the gaseous monomer into a fluid bed reactor through a dispersion grid from a bottom of the fluid bed reactor by means of a blower while feeding a solid polymerisation catalyst into the fluid bed reactor to thereby form a fluid bed in the fluid bed reactor so that a gas phase polymerization reaction is carried out in the fluid bed.

Further, the present invention relates to a gas phase polymerisation apparatus in which the above gas flow rate controlling method is employed.

BACKGROUND OF THE INVENTION

In the production of a polyolefin such as polyethylene, it is common practice to employ a gas phase polymerization method in which a gas phase polymerization of, for example, an olefin monomer such as ethylene is performed in the presence of a titanium-based solid catalyst.

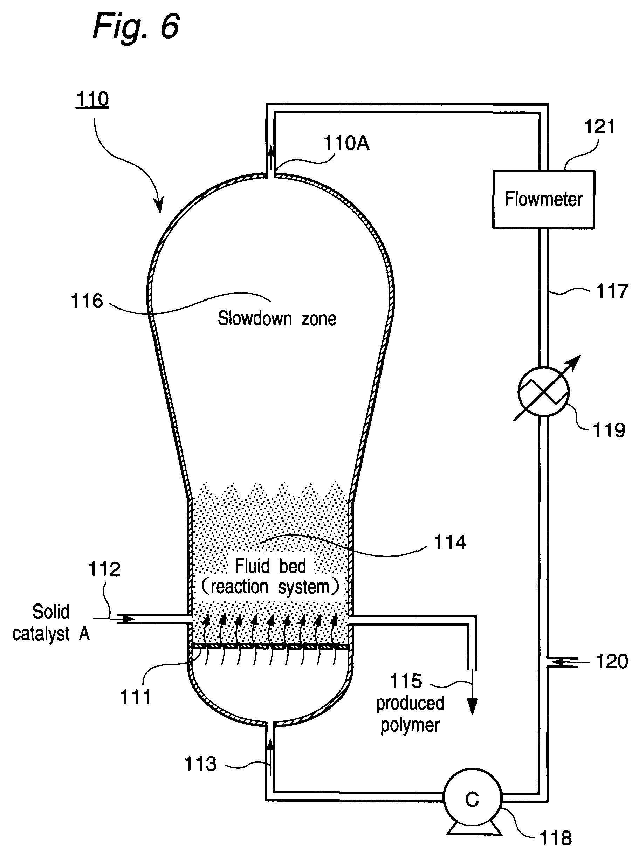

In this gas phase polymerization method, for example, solid catalyst A is fed through supply line 112 into fluid bed reactor 110, referring to Fig. 6.

Simultaneously, a gaseous olefin introduced from a bottom part of the fluid bed reactor 110 through supply line 113 is blown through gas dispersion grid 111 composed of, for example, a perforated plate and arranged in the vicinity of the bottom of the fluid bed reactor 110 so as to maintain fluid bed (reaction system) 114 in a fluid state. In the fluid bed 114, a polymerization reaction is carried out. Polymer particles formed by the polymerization reaction in the fluid bed 114 are continuously withdrawn from the fluid bed reactor 110 through line 115. For example, unreacted gaseous olefin having passed through the fluid bed 114 of the fluid bed reactor 110 has its flow velocity reduced in slowdown zone 116 disposed in an upper part of the fluid bed reactor 110 and is discharged from the fluid bed reactor 110 through gas outlet 110A disposed at an upper part of the fluid bed reactor 110. The unreacted gaseous olefin having been discharged from the fluid bed reactor 110 is led through circulating line 117 and again blown into the fluid bed 114 of the fluid bed reactor 110. The gaseous olefin is passed through heat exchanger (cooler) 119 provided on the circulating line 117 to thereby be cooled and fed through supply line 120 combined with the circulating line 117 to blower 118, by which the gaseous olefin is continuously fed into the fluid bed reactor 110.

At least a given flow rate of gaseous olefin must be fed through the supply line 113 into the fluid bed reactor 110 in order to maintain the fluid state of the fluid bed 114. On the other hand, when the flow rate of gaseous olefin is in excess, polymer powder passes through the slowdown zone 116 and goes outside with the result that the heat exchanger, the blower, the dispersion grid, etc. are clogged to thereby hamper the operation thereof.

Therefore, generally, the flow rate of gaseous olefin blown into the fluid bed reactor 110 has been controlled by disposing flow meter 121 on the circulating line 117 to thereby monitor the flow rate by means of the flow meter 121 and, further, by changing the number of revolutions of the impeller of the blower 118 with the use of a fluid coupling including motor or inverter motor according to necessity, or by disposing a suction vane, known as inlet guide vane (IGV), on an inlet side of the blower 118 to thereby change vane characteristics in the blower 118 according to necessity, or by conducting closing and opening of a valve.

As the flow meter 121, there can be mentioned, for example, an orifice flow meter. In the use thereof, the circulating line 117 must have a large straight pipe length (for example, when the pipe diameter is 900 ⌀, the straight pipe length is 9 m), so that the apparatus is enlarged. Further, in the use of the orifice flow meter, there are a danger of a pressure loss being increased and a danger of polymer powder mixed in the gas from the circulating line 117 sticking to the flow meter to thereby deteriorate measurement accuracy. Moreover, the detected flow rate is that of the circulating line, and the flow rate from the blower 118 is not necessarily monitored, so that there is a danger of the control of the flow rate of gaseous olefin being not accurately based on the state within the fluid bed reactor to thereby disenable steadying the reaction within the fluid bed reactor. As flow meters other than the above orifice flow meter, there can be mentioned, for example, an ultrasonic flow meter, an eddy flow meter and a thermal flow meter. These are being studied as a flow meter capable of mitigating the drawbacks of the orifice flow meter. However, no industrial success has been established yet.

OBJECT OF THE INVENTION

The present invention has been made taking the above prior art into account. It is an object of the present invention to provide a method of controlling a gas flow rate in a gas phase polymerization apparatus, which method enables not only controlling the flow rate of gaseous monomer blown into a fluid bed reactor during the polymerization reaction accurately in conformity with the state of gas in the fluid bed reactor but also realizing the flow rate control with excellent response characteristic and at low pressure loss, and which method does not require a large straight pipe length in the control of flow rate.

It is another object of the present invention to provide a gas phase polymerization apparatus in which the above gas flow rate controlling method is employed.

## SUMMARY OF THE INVENTION

For solving the above problems, the method of controlling a gas flow rate in a gas phase polymerization apparatus according to the present invention, in producing a polymer through the step of blowing a gaseous monomer of predetermined density into a fluid bed reactor through a dispersion grid from a bottom of the fluid bed reactor by means of a blower, while feeding a solid polymerization catalyst into the fluid bed reactor, to thereby form a fluid bed in the fluid bed reactor so that a gas phase polymerization reaction is carried out in the fluid bed, comprises:

measuring a gaseous monomer pressure differential between an inlet side and an outlet side of the blower;
computing parameter H based on measuring results and the density of the gaseous monomer;
computing a number of revolutions to be exhibited by a blower impeller for obtaining desirable gas flow rate Q from the parameter H on the basis of characteristic curve of the blower; and
controlling the number of revolutions of the blower impeller by the computed value of number of revolutions so that the flow rate of the gaseous monomer is controlled.

It is preferred that the impeller of the blower be fitted with blades of predetermined configuration and that the characteristic curve of the blower be a curve determined by the configuration of the blades, which curve shows a relationship between the parameter H and the gas flow rate Q, obtained for each number of revolutions of the impeller.

Alternatively, the above method of controlling a gas flow rate comprises:

measuring a gaseous monomer pressure differential between an inlet side and an outlet side of the blower;
computing parameter H based on measuring results and the density of the gaseous monomer;
computing an opening ratio to be had by a suction vane of predetermined configuration, this suction vane being adapted to guide the gaseous monomer to the blower impeller, for obtaining desirable gas flow rate Q from the parameter H on the basis of characteristic curve of the blower; and
controlling the opening ratio of the suction vane by the computed value of opening ratio so that the flow rate of the gaseous monomer is controlled.

It is preferred that the characteristic curve of the blower be a curve determined by the configuration of the suction vane, which curve shows a relationship between the parameter H and the gas flow rate Q, obtained for each opening ratio of the suction vane.

The gas phase polymerization apparatus of the present invention is constructed so as to produce a polymer through the step of blowing a gaseous monomer of predetermined density into a fluid bed reactor through a dispersion grid from a bottom of the fluid bed reactor by means of a blower, while feeding a solid polymerization catalyst into the fluid bed reactor, to thereby form a fluid bed in the fluid bed reactor so that a gas phase polymerization reaction is carried out in the fluid bed, which gas phase polymerization apparatus comprises:

a differential pressure detecting unit capable of measuring a gaseous monomer pressure differential between an inlet side and an outlet side of the blower; and
a flow rate controlling unit comprising a computation unit and a blower controlling unit,
the computation unit capable of computing parameter H based on the pressure differential measured by the differential pressure detecting unit and the density of the gaseous monomer and capable of computing a number of revolutions to be exhibited by a blower impeller for obtaining desirable gas flow rate Q from the parameter H on the basis of characteristic curve of the blower,
the above blower controlling unit capable of controlling the number of revolutions of the blower impeller by a value computed by the computation unit.

It is preferred that the impeller of the blower be fitted with blades of predetermined configuration and that the characteristic curve of the blower be a curve determined by the configuration of the blades, which curve shows a relationship between the parameter H and the gas flow rate Q, obtained for each number of revolutions of the impeller.

Alternatively, the above gas phase polymerization apparatus comprises:

a suction vane disposed on an inlet side of the blower and adapted to guide the gaseous monomer to the impeller of the blower;
a differential pressure detecting unit capable of measuring a gaseous monomer pressure differential between an inlet side and an outlet side of the blower; and
a flow rate controlling unit comprising a computation unit and a blower controlling unit,
the computation unit capable of computing parameter H based on the pressure differential measured by the differential pressure detecting unit and the density of the gaseous monomer and capable of computing an opening ratio to be had by the suction vane for obtaining desirable gas flow rate Q from the parameter H on the basis of characteristic curve of the blower,
the above blower controlling unit capable of controlling the opening ratio of the suction vane by a value computed by the computation unit.

It is preferred that the characteristic curve of the blower be a curve determined by the configuration of the suction vane, which curve shows a relationship between the parameter H and the gas flow rate Q, obtained for each opening ratio of the suction vane.

BRIEF DESCRIPTION OF THE DRAWING

Fig. 1 is a schematic diagram showing essential parts of the gas phase polymerization apparatus of the present invention;
Fig. 2 is a flow chart for illustrating the method of controlling a gas flow rate in a gas phase polymerization apparatus according to the present invention;
Fig. 3 is a graph for illustrating the principle of operation of the above method of controlling a gas flow rate;
Fig. 4 is a graph for illustrating the principle of operation of the above method of controlling a gas flow rate;
Fig. 5 is a block diagram showing an embodiment of CPU 34 of the above gas phase polymerization apparatus;

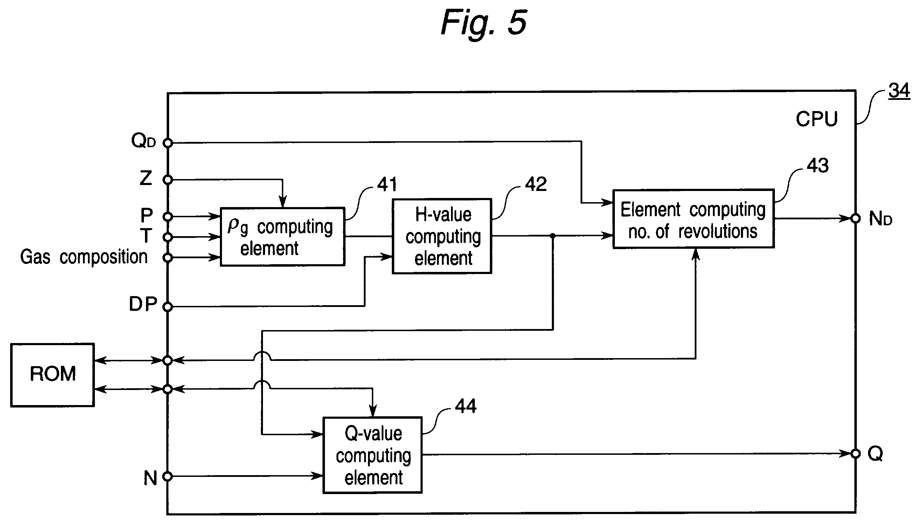

Fig. 5 is a block diagram showing an embodiment of CPU 34 of the above gas phase polymerization apparatus; and
Fig. 6 is a schematic diagram showing essential parts of the gas phase polymerization apparatus of the prior art.

Description of Mark

1:      fluid bed reactor,
4:      fluid bed (reaction system),
8:      blower,
11:     gas dispersion grid,
31:     differential pressure detecting unit,
33:     flow rate controlling unit,
34:     CPU,
35:     blower controlling unit,
41:     $\rho g$ computing element,
42:     H-value computing element, and
43:     revolution speed computing element.

EMBODIMENT OF THE INVENTION

The method of controlling a gas flow rate in a gas phase polymerization apparatus according to the present invention and the gas phase polymerization apparatus in which the above method is employed will be described in detail below with reference to the drawings.
The terminology "polymerization" used in the present invention may mean not only homopolymerization but also a combination of homopolymerization and copolymerization. Also, the terminology "polymer" used in the present invention may mean not only a homopolymer but also a combination of homopolymer and copolymer. Further, the gaseous monomer used in the copolymerization means a mixture of a plurality of gaseous monomers.

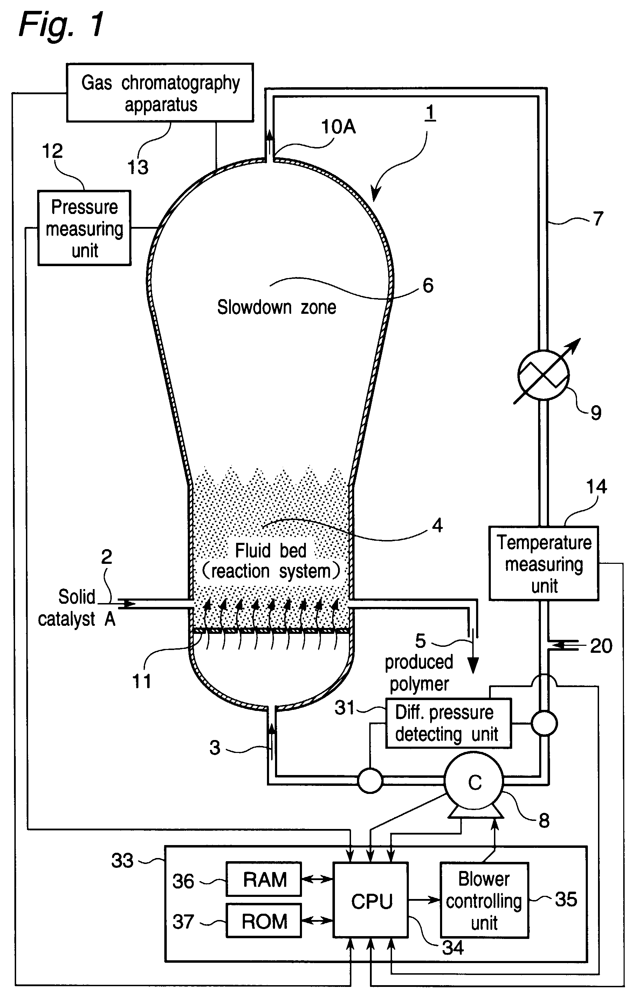

Fig. 1 is a schematic diagram of the gas phase polymerization apparatus in which use is made of the gas flow rate controlling method according to the present invention. Referring to Fig. 1, the gas phase polymerization apparatus is constructed so as to produce a polymer or copolymer through the step of blowing a gaseous monomer into fluid bed reactor 1 through gas dispersion grid 11 from a bottom of the fluid bed reactor 1 by means of blower 8, while feeding solid polymerization catalyst A into the fluid bed reactor 1, to thereby form fluid bed 4 in the fluid bed reactor 1 so that a gas phase polymerization reaction is carried out in the fluid bed 4. Herein, the gaseous monomer is at least one monomer (monomer or comonomer) which polymerizes upon the action of a solid polymerization catalyst and may be supplied to the polymerization system together with a molecular weight regulator such as hydrogen and an inert gas such as nitrogen or a hydrocarbon.
In this gas phase polymerization apparatus, solid catalyst A is fed through supply line 2 into fluid bed reactor 1. Simultaneously, a gaseous monomer such as gaseous olefin introduced from a bottom part of the fluid bed reactor 1 through supply line 3 is blown through gas dispersion grid 11 composed of, for example, a perforated plate and arranged in the vicinity of the bottom of the fluid bed reactor 1 so as to maintain fluid bed (reaction system) 4 in a fluid state. In the fluid bed 4, a polymerization reaction is carried out. The gaseous monomer is continuously fed through supply line 20 combined with circulating line 7.
Polymer particles formed by the advance of polymerization reaction in the fluid bed 4 are continuously withdrawn from the fluid bed reactor 1 through line 5.
Unreacted gaseous monomer having passed through the fluid bed 4 has its flow velocity reduced in slowdown zone 6 disposed in an upper part of the fluid bed reactor 1 and is discharged from the fluid bed reactor 1 through gas outlet 10A disposed at an upper part of the fluid bed reactor 1.
Because the unreacted monomer having been discharged from the fluid bed reactor 1 must be deprived of polymerization reaction heat before being again blown into the fluid bed 4 of the fluid bed reactor 1, the gaseous monomer is introduced in heat exchanger (cooler) 9 connected to an upstream side of the circulating line 7 and cooled.

The apparatus is so constructed that, subsequently, the monomer gas having been cooled by the heat exchanger 9 is led through blower 8 disposed on a downstream side of the circulating line 7 and supply line 3 and again blown from the bottom of the fluid bed reactor 1 through the gas dispersion grid 11 into the fluid bed 4 of the fluid bed reactor 1.

The gas phase polymerization apparatus is fitted, on an inlet side and an outlet side of the blower 8, with a differential pressure detecting unit 31 capable of measuring a gaseous monomer pressure differential between the blower inlet side and the blower outlet side. Flow rate controlling unit 33 is connected to the blower 8. This flow rate controlling unit 33 includes CPU 34 and blower controlling unit 35. The CPU 34 is a computation unit capable of computing the number of revolutions $N_D$ to be exhibited by the impeller of the blower 8 for obtaining desirable gas flow rate $Q_D$, and the blower controlling unit 35 is capable of controlling the number of revolutions of the impeller of the blower 8 by the number of revolutions $N_D$ computed by the computation unit. The CPU 34 computes a head H (hereinafter simply referred to as "H-value") which is a parameter based on the pressure differential measured by the differential pressure detecting unit 31 and the density of the gaseous monomer and obtains the above desirable gas flow rate $Q_D$ from the H-value on the basis of characteristic curve of the blower 8. It is preferred that the blower 8 be a centrifugal blower. Although not shown, the blower 8 on its inlet side may be furnished with a radially arranged suction vane, known as inlet guide vane, which is adapted to guide the gaseous monomer to the blower impeller. When this blower furnished with the inlet guide vane is used, it is feasible to measure the opening ratio of the vane and control the gas flow rate on the basis of blower characteristic curve determined for each opening ratio.

To the fluid bed reactor 1 are connected pressure measuring unit 12 capable of detecting internal gas pressure P in the reactor 1 and gas chromatography apparatus 13 for detecting the internal gas composition. Measuring results obtained by the pressure measuring unit 12 and the gas chromatography apparatus 13 are forwarded to the CPU 34. To a downstream side of the circulating line 7 is connected temperature measuring unit 14 capable of detecting the temperature T of gas prior to the combination with the supply line 20.

The condition of the gas of the circulating line 7 can be monitored by the pressure measuring unit 12, the gas chromatography apparatus 13 and the temperature measuring unit 14.

The differential pressure detecting unit 31 measures the gaseous monomer pressure differential $\Delta P$ between the inlet side and the outlet side of the blower 8 and forwards results to the CPU 34 of the flow rate controlling unit 33.

This flow rate controlling unit 33 is fitted with the CPU 34, the blower controlling unit 35, RAM 36 and ROM 37. The CPU 34 computes the optimum number of revolutions $N_D$ of the impeller from the above pressure P, temperature T, gas composition, pressure differential $\Delta P$ and desirable gas flow rate $Q_D$ and forwards the data of the number of revolutions $N_D$ of the impeller to the blower controlling unit 35. The blower controlling unit 35 controls the revolution of the blower impeller on the basis of the data of the number of revolutions $N_D$ of the impeller so that the number of revolutions of the impeller turns to be $N_D$.

The above construction enables blowing the gas into the fluid bed reactor 1 at a predetermined suitable flow rate. Although the above construction automatically controls the number of revolutions of the blower impeller by means of the blower controlling unit 35, the flow rate can be controlled by employing, for example, a display unit capable of displaying the number of revolutions $N_D$ on the basis of the data of the number of revolutions $N_D$ in place of the blower controlling unit 35 and by manually changing the number of revolutions of the blower impeller in accordance with the display of the display unit.

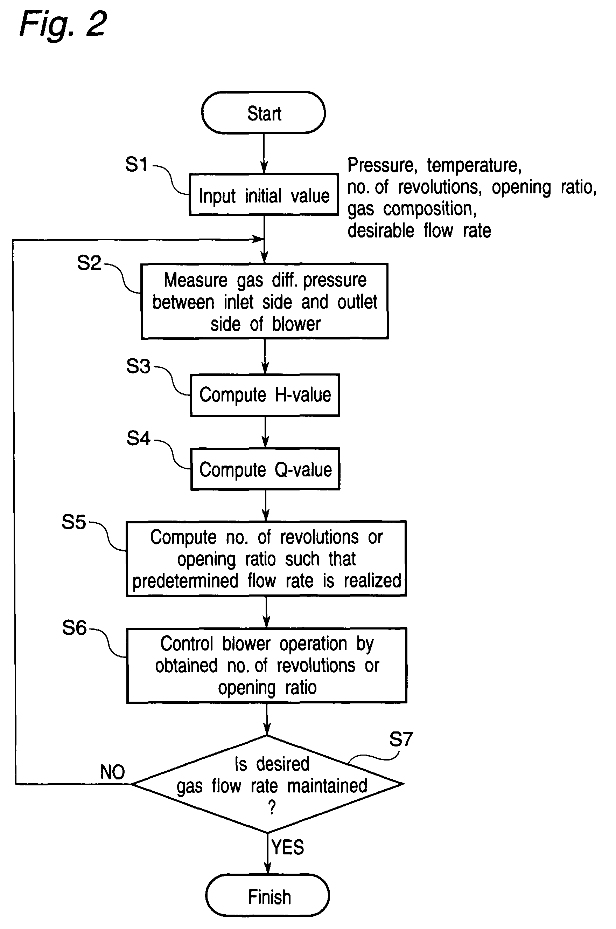

Referring to Fig. 2, first, the initial value of number of revolutions of the blower impeller is inputted in step S1 of the gas flow rate controlling method for controlling the flow rate of gaseous monomer with respect to the blower of the above gas phase polymerization apparatus. This initial value is often smaller than the required number of revolutions, gradual access to which is carried out by subsequent steps. The flow rate of the gaseous monomer is controlled by measuring the gaseous monomer pressure differential between the blower inlet side and the blower outlet side (step S2), computing the H-value from measuring results and the density of the gaseous monomer (step S3), computing the number of revolutions of blower impeller or opening ratio of inlet guide vane for obtaining desirable gas flow rate Q from the above H-value on the basis of the characteristic curve of the blower (step S5), and controlling the number of revolutions of blower impeller or the opening ratio of inlet guide vane by the resultant computed value (step S6).

It is preferred that the characteristic curve of the blower be a curve which is stored in, for example, ROM 37 of Fig. 1, is determined by the configuration of blades of the blower, and is obtained for each number of revolutions of the impeller, and shows the relationship between the H-value and the gas flow rate Q. Alternatively, the above characteristic curve may be a curve determined by the configuration of the inlet guide vane. In this case, the characteristic curve is obtained for each opening ratio of the inlet guide vane.

The storing of the characteristic curve in the ROM 37 may be carried out by employing a recording medium with the use of a recording medium readout device (not shown), or by manually inputting with the use of an input device (not shown), or by withdrawing from a data base (not shown).

In the above gas flow rate controlling method, the blower 8 is operated at an appropriate revolution speed and the fluid bed reactor 1 is operated. In step S1, the initial values such as desirable gas flow rate $Q_D$, opening ratio, number of revolutions, gas composition, temperature T and pressure P of gaseous monomer, e.g., olefin monomer in the circulating line 7 are inputted. Then, an advance is made to step S2.

In the step S2, the gas pressure differential $\Delta P$ between the inlet side and the outlet side of the blower is measured. Then, an advance is made to step S3.

In the step S3, the H-value is computed from the pressure differential $\Delta P$ and the gas density $\rho_g$ according to the following formula (1). Then, an advance is made to step S4. The gas density is a value determined when the pressure P, temperature and gas composition are determined.

$$H = \Delta P / \rho_g \qquad (1)$$

provided that $\rho_g = f(P, T, \text{gas composition}, z)$
z: compressibility factor.

In particular, when use is made of an ideal gas,

$$\rho_g = w/V = P \times M/(z \times (R \times T))$$

wherein P and T are as mentioned above, w represents the weight of gas, V represents the volume of gas, M represents the molecular weight of gas, and R represents gas constant.

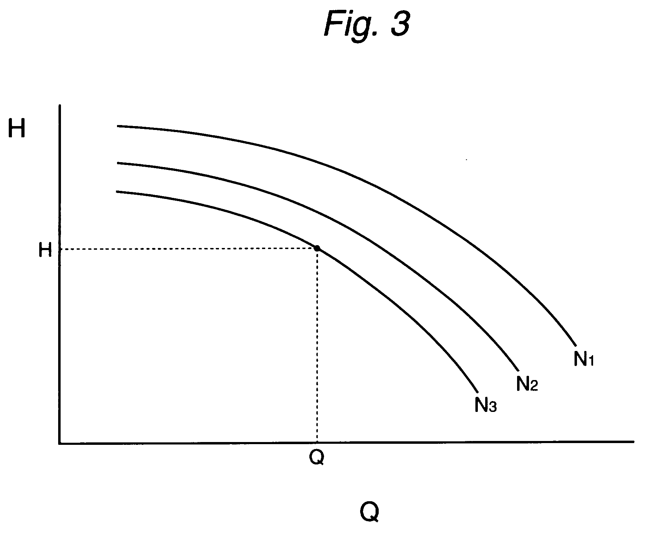

In the step S4, the gas flow rate Q is determined from the H-value and the number of revolutions N ($N_3$ in Fig. 3) of the impeller of the blower 8 or opening ratio of inlet guide vane on the basis of the characteristic curve of blower as shown in Fig. 3. Then, an advance is made to step S5. This step S4 is an optional step. As mentioned above, the characteristic curve is determined by the configuration of blades arranged on the impeller of the blower or, in the use of blower fitted with inlet guide vane, by the configuration of the inlet guide vane.

In the step S5, for example, the number of revolutions of blower impeller corresponding to a combination of, for example, the above H-value and desirable gas flow rate $Q_D$ is determined as the number of revolutions $N_D$ on the basis of the above characteristic curve. Then, an advance is made to step S6.

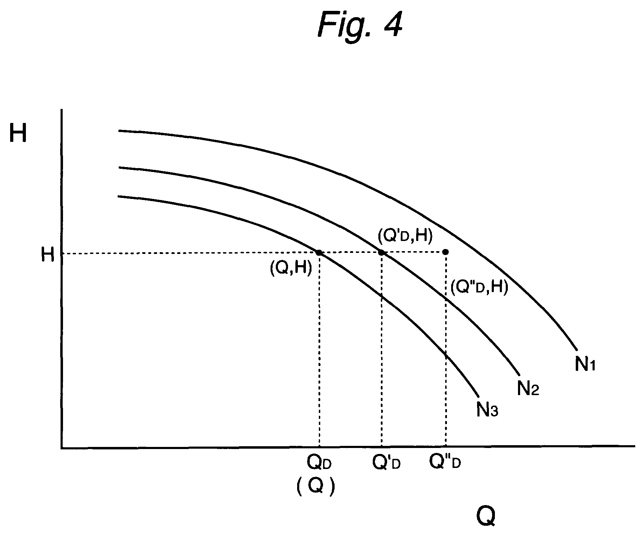

Referring to Fig. 4, when the desirable gas flow rate $Q_D$ is equal to the above gas flow rate Q, the number of revolutions corresponding to curve including point (Q, H), i.e., then the current number of revolutions (e.g., $N_3$) is determined as the number of revolutions $N_D$. Also, when, for example, the gas flow rate $Q_D'$ is desirable flow rate, the current number of revolutions is $N_3$ but the number of revolutions $N_2$ corresponding to curve including point ($Q_D'$, H) is determined as the number of revolutions $N_D$.

Moreover, when the gas flow rate $Q_D''$ is desirable flow rate, the condition is observed upon, for example, manually regulating the number of revolutions to $N_1$ or $N_2$. If necessary, further control may be effected.

In the step S6, the revolving movement of the blower impeller is controlled at the obtained number of revolutions $N_D$. Then, an advance is made to step S7. This control operation naturally can be performed either manually with the use of an input device or the like or automatically.

In the step S7, the gas flow rate after the control of revolving movement of the blower impeller is computed in the above manner, and whether or not the gas flow rate is maintained at the predetermined flow rate $Q_D$ is judged. When the judgment result is YES, namely, the gas is fed at the desirable flow rate $Q_D$ from the blower 8, the control operation is completed. On the other hand, when the judgment result is $N_O$, namely, either when the gas flow rate Q is not stable or when the desirable flow rate $Q_D$ is not maintained, a return is made to the step S2 and the operation is repeated.

Even after the control operation is completed, the control of gas flow rate in conformity with changes of, for example, the above pressure differential $\Delta P$, pressure P of gaseous monomer, gas composition and temperature T can be performed by repeating the operation of step S2 onwards, for example, every arbitrary time.

The above construction of the gas flow rate controlling method enables performing the gas flow rate control by controlling the number of revolutions of the impeller so that, when operated at desirable revolution speed, the blower impeller is operated at the same revolution speed and so that, when not operated at desirable revolution speed, the blower impeller is operated at the revolution speed changed to the desirable revolution speed, without the need to provide special means for measuring the flow rate of gaseous monomer blown into the fluid bed reactor of the gas phase polymerization apparatus to thereby obtain measured flow rate.

It is not needed to install direct means for measuring the flow rate of gaseous monomer, so that there is no danger of the accuracy of gas flow rate control being deteriorated by the measuring means becoming unable to accurately monitor the state of gaseous monomer because of, for example, the sticking of polymer powder mixed in the gaseous monomer passing through the measuring means. Further, there are advantages such that the control of gas flow rate can be realized with excellent response and at low pressure loss and such that no large straight pipe length is needed at the time of flow rate control. In the present invention, the control of gas flow rate can be performed accurately in accordance with the state of gas in the fluid bed, for example, gas pressure and gas composition.

Providing the step S7 enables coping with changes of the above pressure differential $\Delta P$ which are probable to occur at the time of changing the number of revolutions.

The above gas flow rate controlling method can be realized by constructing the CPU 34, for example, as shown in Fig. 5. In the following description, the step number of Fig. 2 corresponding to the operation of each element is parenthesized.

Referring to Fig. 5, $\rho_g$ computing element 41 computes the gas density $\rho_g$, according to the following formula, from the pressure P fed through terminal P from the pressure measuring unit 12, the temperature T fed through terminal T from the temperature measuring unit 14, the gas composition data fed through a gas composition input terminal from the gas chromatography apparatus 13 and the compressibility factor z fed from terminal z and forwards the obtained gas density $\rho_g$ to H-value computing element 42.

$$\rho_g = f(P,\ T,\ \text{gas composition},\ z)$$

When use is made of an ideal gas,

$$\rho_g = w/V = P \times M/(z \times (R \times T))$$

wherein P, T and z are as mentioned above, w represents the weight of gas, V represents the volume of gas, M represents the molecular weight of gas, and R represents gas constant.

The H-value computing element 42 computes H-value, according to the following formula (1), from the gas density $\rho_g$ from the $\rho_g$ computing element 41 and the pressure differential $\Delta P$ fed through terminal $\Delta P$ from the differential pressure detecting unit 31 (step S3) and forwards the obtained H-value to revolution speed computing element 43 and Q-value computing element 44.

$$H = \Delta P/\rho_g \qquad (1).$$

The revolution speed computing element 43 computes desirable number of revolutions $N_D$ from the above H-value and the desirable gas flow rate $Q_D$ fed from terminal $Q_D$ on the basis of the characteristic curve fed from the ROM 37 (step S5) and outputs the data of the number of revolutions $N_D$ from terminal $N_D$. The data of the number of revolutions $N_D$ data are fed to the blower controlling unit 35, referring to Fig. 1. Thus, the number of revolutions of the blower impeller is controlled (step S6). The above gas flow rate $Q_D$ is a value manually inputted, for example, with the use of an input device (not shown) and fed to the terminal $Q_D$.

The Q-value computing element 44 computes gas flow rate Q corresponding to the computed H-value from the above H-value and the number of revolutions N from terminal N on the basis of the characteristic curve fed from ROM 37 (step S4) and forwards it to terminal Q. The Q-value computing element 44 is an optional constituent, and the data fed to the terminal Q may be forwarded to, for example, a display unit to thereby effect display for monitoring.

The differential pressure detection by the differential pressure detecting unit 31, the computation of the number of revolutions $N_D$ by the CPU 34 and the control of the number of revolutions of the impeller by the blower controlling unit 35 are carried out from time to time even after the control of the number of revolutions of the impeller has been executed on the basis of the data of the number of revolutions $N_D$. Thus, the number of revolutions of the impeller can be controlled in conformity with changes of, for example, the above pressure differential $\Delta P$, pressure P of gaseous monomer, gas composition and temperature T.

The above construction of the gas phase polymerization apparatus enables performing the gas flow rate control either by controlling the number of revolutions of the impeller so that, when operated at desirable revolution speed, the blower impeller is operated at the same revolution speed and so that, when not operated at desirable revolution speed, the blower impeller is operated at the revolution speed changed to the desirable revolution speed, or by controlling the opening ratio of the inlet guide vane, without the need to provide special means for measuring the flow rate of gaseous monomer to thereby obtain measured flow rate. Thus, the fluid bed 4 can be maintained in a given fluid state.

Moreover, it is not needed to install direct means for measuring the flow rate of gaseous monomer, so that there is no danger of the accuracy of gas flow rate control being deteriorated by the measuring means becoming unable to accurately monitor the state of gaseous monomer because of, for example, the sticking of polymer powder mixed in the gaseous monomer passing through the measuring means. Further, there are advantages such that the control of gas flow rate can be realized with excellent response and at low pressure loss and such that no large straight pipe length is needed at the time of flow rate control. In the present invention, the control of gas flow rate can be performed accurately in accordance with the state of gas in the fluid bed, for example, gas pressure and gas composition.

Preferred embodiments of the present invention have been described, to which, however, the present invention is not limited. Various modifications can be made insofar as the object of the present invention is not deviated from.

EFFECT OF THE INVENTION

The method of controlling a gas flow rate in a gas phase polymerization apparatus and the gas phase polymerization apparatus according to the present invention enable realizing the gas flow rate control of gaseous monomer with excellent response and at low pressure loss, accurately in conformity with the state of the gas in the fluid bed. Moreover, a large straight pipe length is not required in the flow rate control, so that the size of the apparatus can be reduced.

**Claims**

1. A method of controlling a gas flow rate in a gas phase polymerization apparatus, which, in producing a polymer through the step of blowing a gaseous monomer of predetermined density into a fluid bed reactor through a dispersion grid from a bottom of the fluid bed reactor by means of a blower, while feeding a solid polymerization catalyst into the fluid bed reactor, to thereby form a fluid bed in the fluid bed reactor so that a gas phase polymerization reaction is carried out in the fluid bed, comprises:

   measuring a gaseous monomer pressure differential between an inlet side and an outlet side of the blower;
   computing parameter H based on measuring results and the density of the gaseous monomer;
   computing a number of revolutions to be exhibited by a blower impeller for obtaining desirable gas flow rate Q from the parameter H on the basis of characteristic curve of the blower; and
   controlling the number of revolutions of the blower impeller by the computed value of number of revolutions so that the flow rate of the gaseous monomer is controlled.

2. The method as claimed in claim 1, wherein the impeller of the blower is fitted with blades of predetermined configuration and wherein the characteristic curve of the blower is a curve determined by the configuration of the blades,

   which curve shows a relationship between the parameter H and the gas flow rate Q, obtained for each number of revolutions of the impeller.

3. A method of controlling a gas flow rate in a gas phase polymerization apparatus, which, in producing a polymer through the step of blowing a gaseous monomer of predetermined density into a fluid bed reactor through a dispersion grid from a bottom of the fluid bed reactor by means of a blower, while feeding a solid polymerization catalyst into the fluid bed reactor, to thereby form a fluid bed in the fluid bed reactor so that a gas phase polymerization reaction is carried out in the fluid bed, comprises:

   measuring a gaseous monomer pressure differential between an inlet side and an outlet side of the blower;
   computing parameter H based on measuring results and the density of the gaseous monomer;
   computing an opening ratio to be had by a suction vane of predetermined configuration, said suction vane being adapted to guide the gaseous monomer to the blower impeller, for obtaining desirable gas flow rate Q from the parameter H on the basis of characteristic curve of the blower; and
controlling the opening ratio of the suction vane by the computed value of opening ratio so that the flow rate of the gaseous monomer is controlled.

4. The method as claimed in claim 3, wherein the characteristic curve of the blower is a curve determined by the configuration of the suction vane,

   which curve shows a relationship between the parameter H and the gas flow rate Q, obtained for each opening ratio of the suction vane.

5. A gas phase polymerization apparatus constructed so as to produce a polymer through the step blowing a gaseous monomer of predetermined density into a fluid bed reactor through a dispersion grid from a bottom of the fluid bed reactor by means of a blower, while feeding a solid polymerization catalyst into the fluid bed reactor, to thereby form a fluid bed in the fluid bed reactor so that a gas phase polymerization reaction is carried out in the fluid bed, which gas phase polymerization apparatus comprises:

   a differential pressure detecting unit capable of measuring a gaseous monomer pressure differential between an inlet side and an outlet side of the blower; and
   a flow rate controlling unit comprising a computation unit and a blower controlling unit,
   said computation unit capable of computing parameter H based on the pressure differential measured by the differential pressure detecting unit and the density of the gaseous monomer and capable of computing a number of revolutions to be exhibited by a blower impeller for obtaining desirable gas flow rate Q from the parameter H on the basis of characteristic curve of the blower,
   said blower controlling unit capable of controlling the number of revolutions of the blower impeller by a value computed by the computation unit.

6. The gas phase polymerization apparatus as claimed in claim 5, wherein the impeller of the blower is fitted with blades of predetermined configuration and wherein the characteristic curve of the blower is a curve determined by the configuration of the blades,

which curve shows a relationship between the parameter H and the gas flow rate Q, obtained for each number of revolutions of the impeller.

7. A gas phase polymerization apparatus constructed so as to produce a polymer through the step of blowing a gaseous monomer of predetermined density into a fluid bed reactor through a dispersion grid from a bottom of the fluid bed reactor by means of a blower, while feeding a solid polymerization catalyst into the fluid bed reactor, to thereby form a fluid bed in the fluid bed reactor so that a gas phase polymerization reaction is carried out in the fluid bed, which gas phase polymerization apparatus comprises:

a suction vane disposed on an inlet side of the blower and adapted to guide the gaseous monomer to the impeller of the blower;
a differential pressure detecting unit capable of measuring a gaseous monomer pressure differential between an inlet side and an outlet side of the blower; and
a flow rate controlling unit comprising a computation unit and a blower controlling unit,
said computation unit capable of computing parameter H based on the pressure differential measured by the differential pressure detecting unit and the density of the gaseous monomer and capable of computing an opening ratio to be had by the suction vane for obtaining desirable gas flow rate Q from the parameter H on the basis of characteristic curve of the blower,
said blower controlling unit capable of controlling the opening ratio of the suction vane by a value computed by the computation unit.

8. The gas phase polymerization apparatus as claimed in claim 7, wherein the characteristic curve of the blower is a curve determined by the configuration of the suction vane,

which curve shows a relationship between the parameter H and the gas flow rate Q, obtained for each opening ratio of the suction vane.

# *Fig. 1*

# Fig. 2

```
                    ┌─────────────┐
                    │   Start     │
                    └──────┬──────┘
                           │
                           ▼
S1 ──┐         ┌───────────────────────┐     Pressure, temperature,
     └─────────│  Input  initial value │     no. of revolutions, opening ratio,
               └───────────┬───────────┘     gas composition,
                           │                 desirable flow rate
                           │
       S2 ──┐              ▼
            └───┌───────────────────────────┐
                │  Measure  gas diff. pressure│
                │ between  inlet side  and  outlet│
                │        side  of  blower     │
                └─────────────┬─────────────┘
                              │
       S3 ──┐                 ▼
            └───┌─────────────────────────┐
                │    Compute  H-value      │
                └─────────────┬───────────┘
                              │
       S4 ──┐                 ▼
            └───┌─────────────────────────┐
                │    Compute  Q-value      │
                └─────────────┬───────────┘
                              │
      S5 ──┐                  ▼
           └───┌──────────────────────────────────┐
               │  Compute  no. of  revolutions  or │
               │      opening  ratio  such  that   │
               │ predetermined  flow  rate  is  realized│
               └────────────────┬─────────────────┘
                                │
      S6 ──┐                     ▼
           └───┌──────────────────────────────────┐
               │   Control  blower  operation  by  │
               │   obtained  no. of  revolutions  or│
               │          opening  ratio           │
               └────────────────┬─────────────────┘
                                │
                                ▼                     S7
                         ◇────────────────◇
              NO        ◇   Is  desired     ◇
        ◄─────────────◇ gas flow rate maintained ◇
                       ◇        ?          ◇
                         ◇────────────────◇
                                │ YES
                                ▼
                        ┌─────────────┐
                        │   Finish    │
                        └─────────────┘
```

Fig. 3

EP 0 900 590 A1

## Fig. 4

EP 0 900 590 A1

Fig. 5

EP 0 900 590 A1

## Fig. 6

**EP 0 900 590 A1**

European Patent Office

**EUROPEAN SEARCH REPORT**

Application Number

EP 98 11 6807

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | WO 95 17952 A (BOREALIS POLYMERS OY) 6 July 1995 * the whole document * | 1 | B01J8/24 C08F2/34 C08F10/00 |
| A,P | EP 0 808 848 A (MITSUI PETROCHEMICAL IND) 26 November 1997 * page 8, line 9 – line 51; figure 1 * | 1 | |

TECHNICAL FIELDS SEARCHED (Int.Cl.6)

B01J
C08F

The present search report has been drawn up for all claims

| Place of search | Date of completion of the search | Examiner |
|---|---|---|
| THE HAGUE | 9 December 1998 | Gamb, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

17